# FASCICULE DE BREVET EUROPEEN

(11) **EP 3 194 066 B1**
(45) Date de publication et mention de la délivrance du brevet: **01.08.2018**
(21) Numéro de dépôt: 15763361.1
(22) Date de dépôt: 17.09.2015
(51) Int. Cl.: B01J 8/06

(54) **RÉACTEUR ÉCHANGEUR COMPORTANT DES CARTOUCHES RÉACTIVES AMOVIBLES AU CONTACT DIRECT D'UN CIRCUIT DE FLUIDE CALOPORTEUR**
AUSTAUSCHREAKTOR MIT ABNEHMBAREN REAKTIVEN PATRONEN IM DIREKTEN KONTAKT MIT EINEM WÄRMEÜBERTRAGUNGSFLÜSSIGKEITSKREIS
EXCHANGE REACTOR COMPRISING REMOVABLE REACTIVE CARTRIDGES IN DIRECT CONTACT WITH A HEAT TRANSFER FLUID CIRCUIT

(30) Priorité: 19.09.2014 FR 1458861
(43) Date de publication de la demande: 26.07.2017
(73) Titulaire: Commissariat à l'Énergie Atomique et aux Énergies Alternatives, 75015 Paris (FR)
(72) Inventeur: DUCAMP, Julien, F-38500 Voiron (FR); BENGAOUER, Alain, F-38920 Crolles (FR); CIGNA, Julien, F-38360 Sassenage (FR); RIGAL, Emmanuel, F-38360 Sassenage (FR)
(74) Mandataire: Brevalex
(86) Numéro de dépôt international: PCT/EP2015/071298
(87) Numéro de publication internationale: WO 2016/042063

(56) Documents cités:
- WO-A1-2011/048361
- WO-A1-2012/146903
- WO-A1-2012/146904

## Description

### DOMAINE TECHNIQUE

La présente invention se rapporte au domaine général des réacteurs échangeurs destinés à la mise en oeuvre de réactions catalytiques endothermiques ou exothermiques.

L'invention trouve de nombreuses applications dans tous types de procédés mettant en oeuvre des réactions catalytiques endothermiques ou exothermiques, et notamment fortement endothermiques ou exothermiques, particulièrement du type solide-gaz. De tels procédés peuvent par exemple utiliser un catalyseur solide, sous forme de poudre ou supporté sur des structures monolithiques ou directement sur les parois d'un réacteur.

Ces procédés peuvent notamment comprendre des procédés de synthèse de carburants et de combustibles, par exemple des combustibles liquides, tels que le méthanol (MeOH), ou gazeux, tels que le méthane (SNG pour « Synthetic Natural Gas » en anglais) ou le diméthyléther (DME), obtenus à partir d'hydrogène et d'oxydes de carbone ou à partir de gaz de synthèse comprenant un mélange d'hydrogène et d'oxydes de carbone.

L'invention peut ainsi être tout particulièrement appliquée à des réactions très exothermiques, telles que celle de méthanation du monoxyde ou du dioxyde de carbone en présence d'hydrogène. Elle peut également s'appliquer à des réactions du type de celle de Fischer-Tropsch, de celle de reformage humide ou à sec du méthane ou d'autres hydrocarbures, ou encore des réactions d'oxydation. L'invention peut également être utilisée en tant qu'échangeur de chaleur pour des applications, notamment celles mettant en oeuvre un gaz, qui nécessitent des opérations de maintenance fréquentes, par exemple dues à la corrosion, à l'encrassement, entre autres.

L'invention propose ainsi un réacteur échangeur comportant des cartouches réactives amovibles au contact direct d'un circuit de fluide caloporteur, ainsi qu'un procédé de fabrication d'un tel réacteur échangeur.

### ÉTAT DE LA TECHNIQUE ANTÉRIEURE

On connaît déjà de nombreuses architectures de réacteurs échangeurs catalytiques utilisés dans l'industrie pour assurer le contrôle et le pilotage thermique de réactions chimiques endothermiques ou exothermiques. Les principaux types de réacteurs échangeurs connus pour de telles réactions sont décrits ci-après.

Tout d'abord, la technologie la plus simple de réacteurs échangeurs catalytiques est la technologie de réacteurs dits « à lit fixe ». Dans ce cas, le réacteur échangeur se présente sous la forme d'un cylindre, à l'intérieur duquel le catalyseur est placé. Le catalyseur peut être présent sous la forme de granulés, par exemple du type extrudats, sphères ou anneaux de Raschig, entre autres. L'apport ou l'évacuation des calories sont généralement opérés par un fluide caloporteur qui circule dans un serpentin situé sur la paroi externe du réacteur ou qui est directement introduit à l'intérieur du réacteur.

La mise en oeuvre de réactions exothermiques au sein de ce type de réacteur échangeur pose de nombreuses difficultés. En effet, la mauvaise dissipation de la chaleur, due principalement à la faible conductivité thermique de l'ensemble formé par le gaz et le catalyseur, entraîne la formation de points chauds au sein du réacteur. Or, la présence de ces points chauds localisés entraîne des vitesses de réaction plus importantes et peut être à l'origine d'un emballement thermique du réacteur. Aussi, ces températures élevées peuvent nuire aux performances du réacteur échangeur, entraînant notamment une baisse de sélectivité ou de conversion, causer la désactivation du catalyseur, et ainsi diminuer grandement sa durée de vie et poser des problèmes de sécurité.

Dans le cas de réactions endothermiques, la formation de points froids est moins problématique car elle n'entraîne pas d'emballement thermique du réacteur. Cependant, ces points froids entraînent toujours une baisse importante des performances du réacteur échangeur.

Par ailleurs, ce type de réacteur échangeur à lit fixe présente aussi l'inconvénient d'engendrer une perte de charge élevée à travers le lit catalytique.

L'utilisation de réacteurs échangeurs à lits fixes multitubulaires permet d'augmenter l'efficacité de la gestion thermique de ces réacteurs. De tels réacteurs sont constitués de plusieurs tubes, de quelques centimètres de diamètre, remplis de catalyseur et placés dans une enceinte (ou calandre) où circule le fluide caloporteur. L'utilisation de tubes plus étroits peut cependant conduire à des phénomènes de court-circuit hydraulique (ou « by-pass » en anglais) aux parois, qui participent à la formation de points chauds et réduisent le temps de contact des réactifs avec le catalyseur, entraînant ainsi une diminution des performances du réacteur échangeur. De plus, la diminution de la taille des grains de catalyseur pouvant accompagner la réduction du diamètre des tubes, elle entraîne également une augmentation de la perte de charge. En outre, la gestion thermique de ce type de réacteur échangeur demeure parfois toujours insuffisante.

Par ailleurs, les solutions mises en place pour contrôler les réactions fortement exothermiques sont souvent complexes et coûteuses. Il peut s'agir par exemple de la dilution du catalyseur par des particules inertes, du recyclage de gaz, de la distribution des réactifs le long des réacteurs ou de manière étagée entre plusieurs réacteurs, ou encore de la dilution des réactifs par un gaz inerte. Dans tous les cas, ces solutions ont pour but de diminuer les vitesses de réaction et l'efficacité catalytique du réacteur échangeur afin de pouvoir contrôler l'exothermie de la réaction.

Aussi, l'architecture du type « à lit fixe » des réacteurs échangeurs présente l'avantage de la simplicité de fabrication mais rend difficile le contrôle thermique et nécessite l'utilisation de catalyseurs stables à haute température.

Une autre technologie de réacteurs échangeurs concerne les réacteurs échangeurs structurés. Inspirés des échangeurs thermiques à plaques, ces réacteurs échangeurs dans lesquels le fluide caloporteur circule dans des canaux caloporteurs insérés entre deux nappes de canaux réactifs pour leur refroidissement, où se trouve le catalyseur et où a lieu la réaction chimique, se prêtent mieux au contrôle de la température des procédés. En effet, la structuration et surtout la réduction de la section de passage du fluide caloporteur par rapport à une simple calandre permet d'intensifier les échanges thermiques entre le fluide caloporteur et le réacteur afin d'évacuer ou d'apporter des calories avec une meilleure efficacité. Pour de tels réacteurs échangeurs, les canaux réactifs, comme les canaux caloporteurs, peuvent être constitués d'un canal gravé dans une plaque ou encore constitués par l'espace laissé entre deux plaques. Selon la technologie choisie pour le refroidissement, ces réacteurs peuvent être isothermes ou anisothermes.

Par ailleurs, il existe également la technologie des réacteurs échangeurs à lits fluidisés. De tels réacteurs ont été développés pour répondre au problème de transfert thermique dans les lits fixes. Ces réacteurs présentent la particularité de mettre en mouvement les grains de catalyseur, d'une taille de l'ordre de la centaine de micromètres, ce qui permet un mélange qui améliore les transferts. Les réacteurs échangeurs à lits fluidisés offrent l'avantage d'une bonne homogénéité thermique dans les réacteurs, ce qui évite les points chauds. De plus, cette technologie présente de nombreux autres inconvénients, et notamment la formation de particules fines entraînées en dehors du réacteur, des difficultés d'extrapolation en taille ou encore des performances moindres en raison de rétro-mélanges dus au mouvement du catalyseur.

La combinaison de réacteurs échangeurs du même type ou de types différents au sein d'une même unité peut également être envisagée afin d'améliorer la conversion, la flexibilité ou la valorisation de la chaleur récupérée.

Par ailleurs, dans le cadre des technologies des réacteurs échangeurs, on connaît également l'utilisation de structures catalytiques conductrices. L'utilisation d'inserts, ou monolithes, céramiques ou métalliques, comme supports de catalyseur permet d'éviter la formation de points chauds en uniformisant les températures du fait de leur meilleure conductivité thermique. Le catalyseur est alors déposé sous forme de dépôt, par exemple par couche d'imprégnation (ou « washcoat » en anglais), sur la surface du monolithe. Ces monolithes peuvent être de différentes formes, les plus classiques étant des nids d'abeilles, extrudés ou formés à partir de plaques corruguées, ou encore des structures alvéolaires ou mousses. Les matériaux de ces supports sont multiples. On peut par exemple citer, pour les monolithes céramiques, l'alumine (Al₂O₃), le carbure de silicium (SiC), l'oxyde de titane (TiO₂) ou l'oxyde de zircone (ZrO₂), ou encore la cordiérite. Les supports métalliques peuvent être constitués de métaux purs ou d'alliages de métalliques comme par exemple d'aluminium ou d'alliages d'aluminium, de cuivre, de nickel ou d'alliages de nickel, ou encore d'alliages fer/chrome/aluminium.

L'homogénéisation des températures au sein de la structure permet un meilleur contrôle thermique du réacteur, garantissant une plus grande durée de vie du catalyseur et permettant une meilleure utilisation du catalyseur, ce qui conduit à des masses de catalyseurs requises plus faibles. La forte conductivité thermique de ces supports permet de plus d'utiliser des tubes de plus grand diamètre, réduisant ainsi le nombre de tubes contenus dans un réacteur. Les pertes de charge sont également grandement réduites par rapport à un réacteur à lit fixe. De plus, l'utilisation de ces supports permet de conduire des réactions fortement exothermiques ou endothermiques sans nécessiter de multiples réacteurs ou recyclages de gaz, réduisant ainsi les coûts du procédé.

Enfin, l'utilisation de ces supports, tant qu'ils restent amovibles, facilite les opérations de remplissage et vidange du catalyseur pour le remplacement de ce dernier et les éventuelles opérations de maintenance.

Néanmoins, il existe des difficultés dans l'insertion de telles structures catalytiques conductrices dans un réacteur échangeur.

Bien que les structures évoquées précédemment possèdent de très bonnes conductivités, l'efficacité thermique du réacteur entier dépend également de la qualité de la liaison thermique entre ces structures et le réacteur. En effet, ces structures sont souvent insérées au sein des canaux du réacteur. Cette insertion rend inévitable la présence d'un espace de gaz entre la structure et le tube, ce qui entraîne la présence d'une résistance thermique élevée à cette interface structure/tube qui diminue fortement l'efficacité du transfert thermique.

Afin de diminuer cette résistance thermique, il est possible d'améliorer le contact thermique entre le tube et la structure, par exemple par soudure ou encore brasage. Cependant, ces méthodes conduisent à lier la structure avec le tube, ce qui ne peut se faire qu'au moment de la fabrication du réacteur échangeur, et a pour conséquence de rendre difficile, voire impossible, le démontage de la structure. Cela rend plus complexes et coûteuses les opérations de maintenance et de remplacement de catalyseur.

Ce problème est déjà connu de l'art antérieur, des exemples de solutions étant données dans le brevet US 8,529,849 A2 et les demandes internationales WO 2005/065187 A2, WO 2011/067503 A1 et WO 2011/067506 A1.

Les demandes internationales WO 2011/067503 A1 et WO 2011/067506 A1 présentent des réacteurs échangeurs utilisant des structures cellulaires (mousses), métalliques ou céramiques, comme support de catalyseur, ces structures étant insérées dans des tubes. Afin d'améliorer le transfert thermique entre ces structures et le tube du réacteur, il est proposé par exemple l'utilisation de colliers ou arceaux pour assurer le contact thermique entre mousse et paroi. Cependant, dans ce cas, le contact thermique n'est que localisé, ce qui est peu propice à l'élimination des points chauds. D'autres possibilités sont également abordées, comme le remplissage de l'espace entre la mousse et la paroi par des fibres ou poudres céramiques ou métalliques.

Le brevet US 8,529,849 B2 décrit l'utilisation de matériaux à mémoire de forme conducteurs pour améliorer le contact entre la structure catalytique et le tube. Ce matériau occupe un espace restreint au moment, et à la température, de l'insertion, et change de forme afin d'occuper plus d'espace à la température de fonctionnement du réacteur. L'espace de gaz présent lors de l'insertion du monolithe est alors rempli par ce matériau à mémoire de forme, ce qui améliore la qualité de la liaison thermique.

Cependant, cette solution suppose le choix d'une température de fonctionnement fixée et est donc difficilement transposable à des conditions opératoires variables.

Enfin, la demande internationale WO 2005/065187 A2 propose différentes méthodes d'insertion de structures monolithiques au sein de tubes, puis d'utiliser les dilatations thermiques des différents matériaux, choisis judicieusement, pour diminuer l'espace entre la structure et les parois du tube, et ainsi réduire la résistance thermique. Il y est divulgué une méthode pour réduire cet espace à moins de 250 µm. De plus, l'insertion de ces structures dans une enveloppe métallique avant l'insertion de l'ensemble dans les tubes du réacteur est également décrite, afin de conserver une résistance thermique faible dans le cas de matériaux ayant une forte rugosité.

Toutefois, cette méthode ne permet pas d'éliminer complètement la formation de points chauds, notamment dans le cas de réactions fortement exothermiques. De plus, cette méthode contraint fortement le choix du couple de matériaux, par les coefficients de dilatation, formant la structure catalytique et le réacteur. WO2012146904 décrit un réacteur tubulaire avec une cartouche dans un procédé de synthèse de méthanol . Par conséquent, les solutions proposées par l'art antérieur pour réduire la résistance thermique à l'interface structure catalytique/tube du réacteur ne semblent pas généralisables, voire insuffisantes. En effet, ces solutions proposent soit de créer des contacts thermiques localisés, ce qui ne permet pas d'obtenir une bonne efficacité de transfert, soit d'utiliser les dilatations thermiques, ce qui rend alors la solution spécifique aux conditions opératoires (températures, pressions, réactions mises en oeuvre, entre autres) et restreint fortement le choix des matériaux. De plus, ces solutions peuvent demeurer insuffisantes, notamment dans le cas de réactions fortement endothermiques ou fortement exothermiques.

Afin d'utiliser au mieux ces structures catalytiques et obtenir ainsi une bonne efficacité de procédé, il est nécessaire d'avoir la plus faible résistance thermique possible à l'interface structure/tube, et ce de manière homogène et sur toute la périphérie de la structure. De plus, la réduction de cette résistance thermique de manière indépendante des conditions opératoires et des matériaux choisis présente un avantage significatif dans le cas de procédés à conditions opératoires variables, mais également pour la généralisation des applications possibles.

### EXPOSÉ DE L'INVENTION

Il existe un besoin pour proposer une solution alternative d'architecture de réacteur échangeur permettant, notamment dans le cas de réactions fortement endothermiques ou exothermiques, de contrôler efficacement les transferts thermiques et donc les températures des procédés mis en oeuvre.

L'invention a pour but de remédier au moins partiellement aux besoins mentionnés précédemment et aux inconvénients relatifs aux réalisations de l'art antérieur.

L'invention vise notamment à concevoir une configuration d'un réacteur échangeur qui facilite la manutention du catalyseur ou de la structure catalytique tout en garantissant l'efficacité de la gestion thermique du réacteur. En effet, l'utilisation de réacteurs échangeurs ayant une bonne gestion thermique peut permettre d'obtenir de meilleures conversions et sélectivités dans des volumes de réacteur moindres. Le meilleur contrôle thermique peut de plus présenter l'intérêt de limiter les risques d'emballements thermiques dans le cas de réactions exothermiques, et donc d'améliorer la sécurité des appareils.

L'invention a ainsi pour objet, selon l'un de ses aspects, un réacteur échangeur, destiné à la mise en oeuvre de réactions catalytiques endothermiques ou exothermiques, comportant :
- un corps de réacteur,
- une pluralité de canaux réactifs comprenant un catalyseur, éventuellement supporté par une structure monolithique catalytique,
- un circuit de fluide caloporteur pour refroidir les canaux réactifs, comprenant des canaux caloporteurs,
caractérisé en ce que les canaux réactifs se présentent sous la forme de cartouches amovibles au contact direct du circuit de fluide caloporteur, et notamment des canaux caloporteurs, et en ce que le corps de réacteur comporte une pluralité de canaux d'insertion dans lesquels sont insérés les cartouches amovibles et à la périphérie desquels circule au moins en partie le fluide caloporteur.

Les cartouches peuvent ainsi comporter un catalyseur non supporté et/ou un catalyseur supporté par une structure monolithique catalytique.

Parmi ses principaux avantages, l'invention peut permettre de faciliter les opérations de maintenance et le remplacement du catalyseur, éventuellement supporté par la structure monolithique catalytique, du fait de l'utilisation de cartouches amovibles. De plus, la liaison de la structure monolithique catalytique éventuelle à la paroi d'une cartouche pouvant avantageusement être réalisée de manière à minimiser la résistance thermique de contact, et la cartouche étant elle-même directement en contact avec le circuit caloporteur, le transfert thermique n'est pas limité par des résistances de contact importantes, ce qui présente un intérêt significatif vis-à-vis des performances du réacteur échangeur. Cette réduction des résistances thermiques peut s'effectuer de manière relativement indépendante des températures de fonctionnement du réacteur échangeur et des matériaux choisis, contrairement aux solutions connues de l'art antérieur. Par ailleurs, la modularité du réacteur échangeur permet une adaptation à la taille de l'installation par simple augmentation du nombre de cartouches en parallèle. Cette modularité offre aussi la possibilité de modifier les propriétés des structures monolithiques catalytiques éventuelles, par exemple en lien avec le catalyseur utilisé, la masse de catalyseur par unité de volume de monolithe, la structure de support, entre autres, d'une cartouche à l'autre. Cela permet, selon le besoin, d'utiliser plusieurs types de cartouches pouvant être placées en série ou en parallèle selon la configuration du réacteur échangeur.

L'invention présente en outre les avantages complémentaires décrits ci-après. La fabrication d'une cartouche est rendue indépendante de celle du réacteur échangeur, et peut se faire dans des environnements dédiés, à savoir par exemple : dans le cas de l'insertion d'une structure monolithique catalytique dans le corps de la cartouche, toutes les opérations (par exemple de brasage, frettage) sont facilitées par la faible taille des cartouches ; dans le cas de l'insertion d'un catalyseur, par exemple en grains, dans le corps de la cartouche, l'opération peut se faire dans un environnement contrôlé (par exemple, du type boîte à gant ou hotte pour le contrôle de la pollution par particules de catalyseurs classés CMR). Un autre avantage de l'utilisation de cartouches est la possibilité d'automatiser le remplissage, mais aussi le contrôle de la qualité (par exemple contrôle des pertes de charge, de la qualité du contact thermique, entre autres). En outre, la manipulation directe des catalyseurs est évitée lors du remplissage du réacteur échangeur, ce qui présente un intérêt vis-à-vis de la sécurité des opérateurs lorsque les catalyseurs sont constitués de matériaux nocifs (par exemple ceux classés CMR). Enfin, dans le cas de l'utilisation d'un catalyseur sous forme de grains, l'invention facilite la manutention du catalyseur sans ajouter de résistance thermique additionnelle. En effet, la résistance thermique lit fixe/paroi de la cartouche est la même que dans un réacteur classique.

Le réacteur échangeur selon l'invention peut en outre comporter l'une ou plusieurs des caractéristiques suivantes prises isolément ou suivant toutes combinaisons techniques possibles.

Les cartouches amovibles peuvent ou non assurer une fonction d'étanchéité entre les réactifs et le fluide caloporteur. En particulier, lorsque le mélange entre réactifs et fluide caloporteur n'est pas admissible, la fonction d'étanchéité doit être assurée. En revanche, pour certaines applications, comme par exemple dans des applications de type échangeur air/air, ce mélange peut être toléré de sorte que la fonction d'étanchéité peut être ou non assurée.

Lorsque les cartouches amovibles comprennent une structure monolithique catalytique, la liaison de la structure à la paroi de la cartouche peut être telle que le contact thermique soit suffisant pour l'application du réacteur échangeur. Cette liaison de la structure monolithique catalytique à la paroi de la cartouche peut être réalisée selon les procédés connus de l'Homme du métier, pouvant par exemple comporter le frettage ou le brasage.

Le réacteur échangeur peut présenter différentes configurations selon la structure des cartouches amovibles et/ou du circuit de fluide caloporteur.

Les cartouches amovibles peuvent comporter une enveloppe, notamment métallique, à l'intérieur de laquelle est inséré le catalyseur, éventuellement supporté par la structure monolithique catalytique.

L'enveloppe des cartouches et l'éventuelle structure monolithique catalytique supportant le catalyseur, peuvent être fabriquées selon les procédés connus par l'Homme du métier.

Les cartouches amovibles peuvent comprendre un catalyseur sous forme de grains, de façon semblable à ce que prévoient les réacteurs échangeurs à lit fixe décrits précédemment.

Les cartouches amovibles peuvent en variante comprendre une structure monolithique catalytique supportant le catalyseur.

Le réacteur échangeur peut comporter un ensemble distributeur de gaz et un ensemble collecteur de gaz, les cartouches comportant notamment à chacune de leurs extrémités un distributeur ou collecteur de gaz.

Ces distributeurs et collecteurs de gaz peuvent être fixés, étant par exemple vissés ou soudés, sur les extrémités des cartouches. Ils peuvent être de formes diverses, par exemple sous forme de tube ou sous forme conique, entre autres.

Le réacteur échangeur peut en outre comporter une arrivée de gaz réactif dans l'ensemble distributeur de gaz et une sortie de produits depuis l'ensemble collecteur de gaz.

Les cartouches peuvent se présenter sous des formes diverses, et notamment sous la forme de tubes cylindriques, notamment de section sensiblement circulaire ou polygonale, par exemple carrée ou rectangulaire, entre autres.

Les canaux caloporteurs du circuit de fluide caloporteur peuvent se présenter au moins en partie sous la forme de canaux longitudinaux et/ou transversaux formés dans le corps de réacteur.

Les canaux caloporteurs du circuit de fluide caloporteur peuvent également être situés au moins en partie sur la paroi des canaux d'insertion, se présentant notamment sous la forme d'alésages formés sur les canaux d'insertion, et/ou sur la paroi des cartouches amovibles.

Lorsque les canaux caloporteurs sont situés au moins en partie sur la paroi des cartouches amovibles, l'usinage de ces canaux peut être réalisé au moment de la fabrication des cartouches amovibles. De tels canaux caloporteurs situés sur la paroi des cartouches amovibles peuvent par exemple se présenter sous la forme de canaux hélicoïdaux le long de la paroi des cartouches amovibles.

Les canaux caloporteurs peuvent encore être sous une forme hélicoïdale.

Par ailleurs, l'invention a encore pour objet, selon un autre de ses aspects, un procédé de fabrication d'un réacteur échangeur tel que défini précédemment, caractérisé en ce qu'il comporte l'étape de formation des canaux d'insertion et des canaux caloporteurs du circuit de fluide caloporteur dans un corps de réacteur.

En particulier, selon une première variante, le corps de réacteur peut être obtenu à partir de la réunion de deux demi-plaques, le procédé comportant les étapes suivantes :
- usinage au moins en partie sur chaque demi-plaque des canaux d'insertion pour l'insertion des cartouches amovibles,
- usinage au moins en partie sur chaque demi-plaque des canaux caloporteurs du circuit de fluide caloporteur,
- assemblage des deux demi-plaques, notamment par vissage ou soudure, pour former un étage du réacteur échangeur,
- assemblage de différents étages de réacteur pour former le réacteur échangeur.

Les deux dernières étapes décrites ci-dessus peuvent éventuellement être réalisées simultanément selon la méthode d'assemblage choisie.

Selon une deuxième variante, le corps de réacteur peut être obtenu à partir d'un seul bloc, le procédé comportant l'étape d'usinage des canaux d'insertion et des canaux caloporteurs directement dans ce bloc.

Un tel usinage peut par exemple se faire par perçage, puis brochage ou électro-érosion.

Le réacteur échangeur et le procédé de fabrication selon l'invention peuvent comporter l'une quelconque des caractéristiques énoncées dans la description, prises isolément ou selon toutes combinaisons techniquement possibles avec d'autres caractéristiques.

### BRÈVE DESCRIPTION DES DESSINS

L'invention pourra être mieux comprise à la lecture de la description détaillée qui va suivre, d'exemples de mise en oeuvre non limitatifs de celle-ci, ainsi qu'à l'examen des figures, schématiques et partielles, du dessin annexé, sur lequel :
- la figure 1A représente, selon une vue en coupe selon A-A de la figure 1B, un exemple de réalisation d'un réacteur échangeur conforme à l'invention,
- la figure 1B représente, selon une vue en coupe selon B-B de la figure 1A, l'exemple de réalisation de réacteur échangeur conforme à l'invention de la figure 1A,
- la figure 2 représente, de façon très schématique et selon une configuration partiellement assemblée, un exemple de réalisation d'une cartouche amovible pour un réacteur échangeur conforme à l'invention,
- la figure 3 représente, partiellement et en perspective, un exemple de configuration possible des cartouches amovibles d'un réacteur échangeur conforme à l'invention,
- la figure 4A est une modélisation en deux dimensions d'un réacteur échangeur selon l'art antérieur, avec insertion d'une structure monolithique catalytique dans le corps du réacteur échangeur,
- la figure 4B est une modélisation en deux dimensions d'un réacteur échangeur conforme à l'invention, avec insertion d'une structure monolithique catalytique dans une cartouche amovible,
- la figure 5 est un graphique représentant les évolutions de température au centre d'une structure monolithique catalytique en fonction de la distance verticale pour trois exemples de simulation de réacteurs échangeurs,
- la figure 6 est un graphique représentant l'étude des écarts de température entre la paroi d'une structure monolithique catalytique et la paroi d'un réacteur échangeur, ou d'une cartouche amovible, pour les trois mêmes exemples de simulation de réacteurs échangeurs que pour la figure 5,
- les figures 7 et 8 et les figures 9 et 10, illustrent, respectivement en vue de face et en perspective, des exemples de configurations d'utilisation de cartouches amovibles pour un réacteur échangeur conforme à l'invention, et
- les figures 11A et 11B illustrent, schématiquement selon une vue latérale, des exemples de sens de circulation de réactifs au travers d'un réacteur échangeur conforme à l'invention.

Dans l'ensemble de ces figures, des références identiques peuvent désigner des éléments identiques ou analogues.

De plus, les différentes parties représentées sur les figures ne le sont pas nécessairement selon une échelle uniforme, pour rendre les figures plus lisibles.

### EXPOSÉ DÉTAILLÉ DE MODES DE RÉALISATION PARTICULIERS

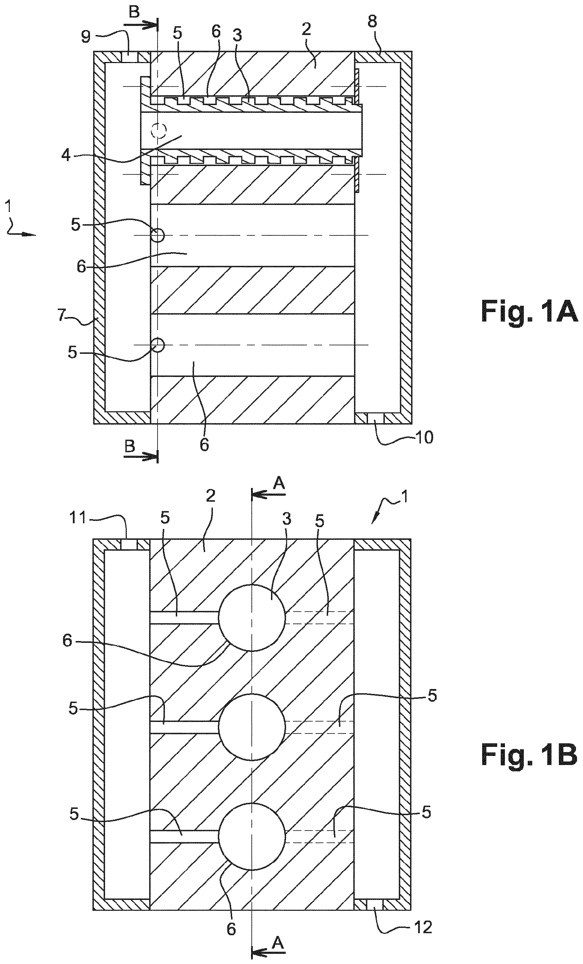

On a tout d'abord représenté sur les figures 1A et 1B un exemple de réalisation d'un réacteur échangeur 1 conforme à l'invention. Plus précisément, la figure 1A est une vue en coupe selon A-A de la figure 1B, et la figure 1B est une vue en coupe selon B-B de la figure 1A.

Le réacteur échangeur 1 est avantageusement destiné à la mise en oeuvre de réactions catalytiques endothermiques ou exothermiques. Il comporte un corps de réacteur 2, une pluralité de canaux réactifs 3 comprenant un catalyseur, et un circuit de fluide caloporteur comprenant des canaux caloporteurs 5.

Conformément à l'invention, les canaux réactifs se présentent sous la forme de cartouches amovibles 3 au contact direct du circuit de fluide caloporteur. Ces cartouches amovibles 3 assurent une fonction d'étanchéité et de tenue mécanique des canaux réactifs 3. De plus, le corps de réacteur 2 comporte une pluralité de canaux d'insertion 6 dans lesquels sont insérés les cartouches amovibles 3 et à la périphérie desquels circule le fluide caloporteur.

Les cartouches amovibles 3 peuvent comprendre un catalyseur sous forme de grains. Ceci peut permettre d'en faciliter la manutention sans ajouter de résistances thermiques supplémentaires.

Toutefois, dans cet exemple, les cartouches amovibles 3 comprennent une structure monolithique catalytique 4 supportant le catalyseur. Il peut par exemple s'agir de mousses, de nids d'abeilles extrudés ou d'objets corrugués, entre autres. Les structures monolithiques catalytiques 4 peuvent être dans des matériaux céramiques ou métalliques, ces derniers offrant toutefois de meilleures conductivités thermiques. Ces structures monolithiques catalytiques 4 servent alors de support pour le catalyseur sous forme de dépôt, celui-ci pouvant être de nature très variée selon la réaction chimique envisagée. Il est cependant souvent constitué d'une céramique poreuse au sein de laquelle la phase active est dispersée.

Par ailleurs, le réacteur échangeur 1 comporte un ensemble distributeur de gaz 7 et un ensemble collecteur de gaz 8 pour la circulation de gaz réactifs dans les cartouches 3.

Le réacteur échangeur 1 comporte ainsi également une arrivée de gaz réactif 9 dans l'ensemble distributeur de gaz 7 et une sortie de produits 10 depuis l'ensemble collecteur de gaz 8. De même, le réacteur échangeur 1 comporte une arrivée de fluide caloporteur 11 et une sortie de fluide caloporteur 12 pour la circulation du fluide caloporteur dans les canaux caloporteurs 5.

Dans cet exemple de réalisation de la figure 1, les cartouches amovibles 3 sont par ailleurs disposées de manière verticale et le fluide caloporteur circule tout autour des cartouches amovibles 3 dans des canaux caloporteurs 5 hélicoïdaux. Toutefois, toute autre disposition que verticale des cartouches amovibles 3 est également possible.

Les cartouches amovibles 3 forment des tubes cylindriques de section variable, par exemple circulaire ou polygonale, et notamment carrée ou rectangulaire. Elles peuvent ainsi s'adapter à la forme de la structure monolithique catalytique 4. Un tube cylindrique de section circulaire est toutefois privilégié pour des applications à fortes pressions pour des raisons de tenue mécanique.

Par ailleurs, l'insertion de la structure monolithique catalytique 4 dans une cartouche amovible 3 est réalisée de manière à minimiser la résistance thermique entre la structure monolithique 4 et les parois de la cartouche amovible 3, qui sera ensuite insérée dans le corps 2 du réacteur échangeur 1.

Selon l'application, et donc la qualité de la gestion thermique requise, l'insertion de la structure monolithique catalytique 4 dans la cartouche amovible 3 peut être réalisée par simple frettage, ou en faisant appel à des techniques de liaison plus efficaces, telles que par exemple la soudure, le brasage, le collage, entre autres. Une très bonne efficacité des transferts thermiques peut ainsi être obtenue tout en conservant le principe de cartouche amovible 3 et ce, sans faire appel à des phénomènes de dilatations thermiques ou autres, et donc relativement indépendamment des températures de fonctionnement et des matériaux choisis.

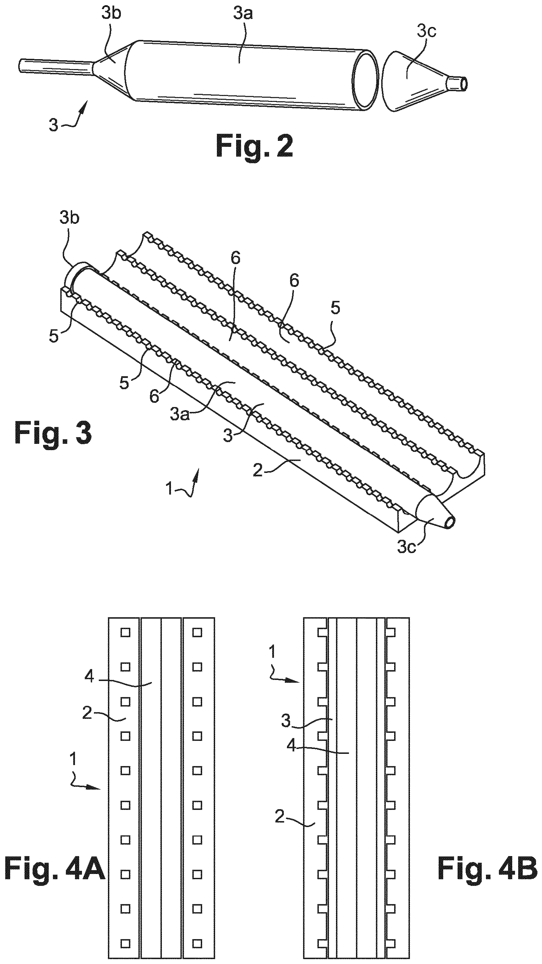

On a représenté sur la figure 2, de façon très schématique et selon une configuration partiellement assemblée, un exemple de réalisation d'une cartouche amovible 3 pour un réacteur échangeur 1 conforme à l'invention.

La cartouche amovible 3 se présente ainsi sous la forme d'un tube cylindrique de section circulaire formé par une enveloppe 3a métallique. Elle comporte en outre à ses extrémités respectivement un distributeur de gaz 3b et un collecteur de gaz 3c, par exemple de forme conique.

De façon générale, et notamment indépendamment de la forme des cartouches amovibles 3, les dimensions des cartouches amovibles 3 peuvent être de l'ordre du centimètre, typiquement de quelques centimètres. A titre d'exemple, la cartouche amovible 3 peut par exemple présenter un diamètre, ou plus grande dimension transversale, compris entre 1 et 10 cm, et présenter une longueur comprise entre 10 et 50 cm.

L'architecture du réacteur échangeur 1 peut s'adapter à la forme des cartouches amovibles 3. Le fluide caloporteur circule directement au contact des cartouches amovibles 3 dans des canaux caloporteurs 5 qui peuvent être de configurations diverses, notamment selon l'axe de circulation et la forme des canaux. Ainsi, les canaux caloporteurs 5 peuvent être situés sur les cartouches amovibles 3 ou dans les canaux d'insertion 6 où elles sont insérées.

On a ainsi représenté sur la figure 3, partiellement et en perspective, un exemple de configuration possible des cartouches amovibles 3 d'un réacteur échangeur 1 conforme à l'invention.

Le réacteur échangeur 1 est ici constitué de trois cartouches amovibles 3 cylindriques, qui sont arrangées horizontalement dans trois canaux d'insertion 6 du réacteur échangeur 1. Le fluide caloporteur circule dans les canaux caloporteurs 5 dans une configuration transverse, autrement dit en courants-croisés, formés dans le corps 2 du réacteur échangeur 1 et autour des cartouches amovibles 3 (seule la partie inférieure du corps 2 du réacteur échangeur 1 est représentée sur cette figure 3).

En comparaison avec ce qui est connu de l'art antérieur, l'invention s'en démarque en permettant l'obtention de transferts thermiques efficaces, tout en simplifiant la manutention des objets en intégrant les structures monolithiques catalytiques 4 dans des cartouches amovibles 3.

En effet, l'utilisation de techniques de liaison thermique avancées entre le réacteur échangeur et une structure monolithique catalytique, comme le brasage, est connue dans l'art antérieur. Toutefois, cette liaison s'accompagne de l'ancrage de la structure monolithique catalytique dans le corps du réacteur échangeur, cette structure monolithique catalytique n'étant par conséquent pas amovible.

Par ailleurs, comme exposé dans la partie relative à l'état de la technique antérieure, il existe différents moyens de réduire la résistance thermique. Cependant, dans le cas de réacteurs échangeurs utilisés pour des réactions fortement endothermiques ou exothermiques, les moyens connus se révèlent insuffisants.

Afin d'illustrer les avantages procurés par l'invention, un code de calcul numérique a été développé pour simuler le comportement d'un réacteur échangeur pour mettre en oeuvre une réaction de méthanation de dioxyde de carbone (CO₂) selon la réaction : *CO*₂ + 4*H*₂ ⇔ *CH*₄ + 2*H*₂O. Une telle réaction est fortement exothermique, avec une enthalpie de réaction ΔᵣH_{298K} de -165 kJ/mol.

Le comportement d'un réacteur échangeur 1 selon l'art antérieur a ainsi été simulé, selon la configuration de la figure 4A, avec l'insertion d'une structure monolithique catalytique 4 cylindrique de 2,54 cm de diamètre dans un tube formé dans le corps 2 du réacteur, avec un espace interstitiel de 250 ou de 100 µm. De plus, le comportement d'un réacteur échangeur 1 conforme à l'invention a également été simulé, selon la configuration de la figure 4B, avec les mêmes paramètres, la structure monolithique catalytique 4 étant toutefois ici insérée dans une cartouche amovible 3.

La conductivité thermique de la structure monolithique catalytique 4 est supposée être de 3 W/m/K, et les parois du corps 2 du réacteur échangeur 1 sont en acier inoxydable de conductivité thermique de 17 W/m/K. De plus, la résistance thermique correspondant à l'espace interstitiel est calculée de manière simplifiée, comme étant égale au rapport entre la dimension de l'espace et de la conductivité du gaz. Dans le cas de la figure 4B spécifique à l'invention, la structure monolithique catalytique 4 est supposée brasée à la cartouche amovible 3, ce qui assure une résistance thermique quasiment nulle.

Par ailleurs, les débits de réactifs sont de 5 NL/min pour le dioxyde de carbone (CO₂) et de 20 NL/min pour l'hydrogène (H₂), la température du fluide caloporteur étant de 350°C et la pression de 10 bars.

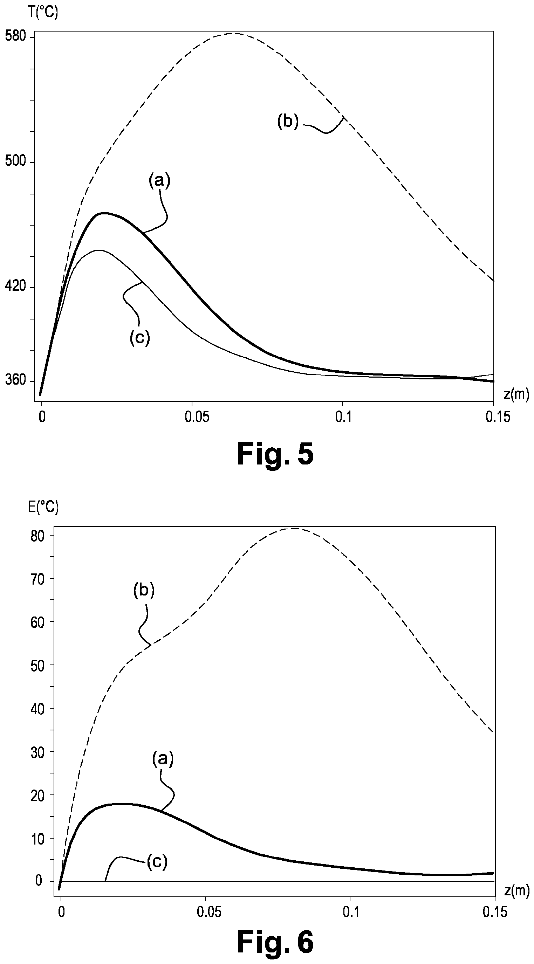

La figure 5 présente alors les évolutions de température, exprimée en degrés Celsius, au centre de la structure monolithique catalytique 4 dans les trois cas, à savoir dans le cas (a) de la figure 4A selon l'art antérieur avec un espace interstitiel de 100 µm, dans le cas (b) de la figure 4A selon l'art antérieur avec un espace interstitiel de 250 µm, et dans le cas (c) de la figure 4B conforme à l'invention. L'axe des abscisses représente la coordonnée z axiale verticale, exprimée en mètres.

On remarque ainsi que, du fait de la forte chaleur de réaction, une forte élévation de la température est observée au centre de la structure monolithique catalytique 4, ce qui caractérise la formation d'un point chaud. Dans le cas (b) d'un espacement interstitiel de 250 µm, la température dépasse 580°C, alors qu'elle est de 468°C dans le cas (a) d'un espacement interstitiel de 100 µm, et de 444°C dans le cas (c) illustrant l'invention.

Par conséquent, l'invention permet de gagner plus de 130°C par rapport au cas (b) d'espacement interstitiel de 250 µm, et permet encore de réduire de plus de 20°C la température maximale par rapport au cas (a) d'espacement interstitiel de 100 µm.

La figure 6 représente par ailleurs l'étude des écarts E de température, exprimés en degrés Celsius, calculés entre la paroi de la structure monolithique catalytique 4 et la paroi du réacteur échangeur 1 pour les cas (a) et (b) selon l'art antérieur, ou de la cartouche amovible 3 pour le cas (c) conforme à l'invention. L'axe des abscisses correspond là aussi à la coordonnée z axiale verticale, exprimée en mètres.

De cette figure 6, il ressort que la formation du point chaud est favorisée par la plus grande résistance thermique de l'espace interstitiel de 250 µm, correspondant au cas (b). Cet écart est en effet beaucoup plus important dans ce cas (b), avec une valeur maximale de 81°C, tandis qu'elle est de 18°C pour un espacement interstitiel de 100 µm, correspondant au cas (a), et est finalement quasiment nulle pour le cas (c) illustrant l'invention. On observe en effet une sensible continuité dans le cas (c) selon l'invention.

La réduction de l'espace interstitiel à une valeur de 250 µm apparaît ainsi nettement insuffisante pour conduire la réaction dans les conditions étudiées. Un espace interstitiel réduit à 100 µm apporte un gain intéressant, mais l'utilisation de l'invention possède un intérêt supérieur pour garantir à la fois la durée de vie des matériaux et les performances accrues du réacteur échangeur 1.

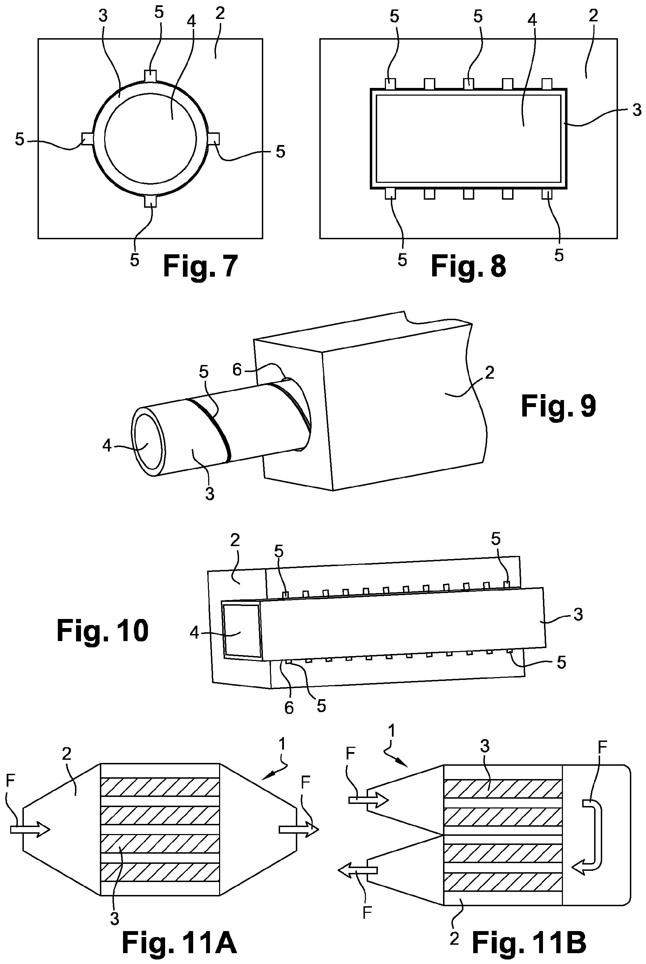

En référence maintenant aux figures 7 à 11B, on présente différentes variantes de réalisation de l'invention. En effet, les configurations possibles de l'invention sont multiples. Elles peuvent notamment dépendre de : la nature de la structure monolithique catalytique 4 (par exemple en mousse, en nid d'abeilles, en ailette, sous forme de monolithe produit à partir de plaques corruguées, entre autres) et de son matériau constitutif (par exemple métallique, tel que de l'aluminium, de l'inox, du cuivre, du nickel, un alliage de fer et de chrome, entre autres, ou céramique, tel que de l'alumine, du zircone, du carbure de silicium, de l'oxyde de titane, entre autres) ou des grains lorsque le catalyseur est sous cette forme ; le nombre, la taille et la forme des cartouches amovibles 3 (par exemple de section circulaire, carrée, rectangulaire, entre autres) ; la structure (forme), le nombre et la configuration des canaux caloporteurs 5, par exemple longitudinaux ou transverses, et de leur localisation, par exemple formés dans le corps 2 du réacteur échangeur 1 ou directement sur la cartouche amovible 3.

Ainsi, la figure 3, décrite précédemment, illustre l'utilisation d'une cartouche amovible 3 de section circulaire, insérée dans un canal d'insertion 6 du réacteur échangeur 1 où sont usinés des canaux caloporteurs 5 transverses.

Par ailleurs, la figure 7 illustre, en vue de face, l'utilisation d'une cartouche amovible 3 de section circulaire. La cartouche amovible 3 est insérée dans un canal d'insertion 6 du réacteur échangeur 1 où sont usinés des canaux caloporteurs 5 longitudinaux.

La figure 8 illustre quant à elle, en vue de face, une configuration avec une cartouche amovible 3 de section rectangulaire. La cartouche amovible 3 est insérée dans un canal d'insertion 6 du réacteur échangeur 1 où sont usinés des canaux caloporteurs 5 longitudinaux.

La figure 9 illustre, en perspective, une configuration d'utilisation d'une cartouche amovible 3 de section circulaire sur laquelle est usiné un canal caloporteur 5 hélicoïdal, la cartouche amovible 3 étant insérée dans le canal d'insertion 6 du réacteur échangeur 1. Le réacteur échangeur 1 comporte également d'autres canaux caloporteurs 5 assurant la distribution du fluide caloporteur dans les canaux caloporteurs 5 hélicoïdaux des cartouches amovibles 3.

La figure 10 illustre, en perspective, une configuration d'utilisation d'une cartouche amovible 3 de section rectangulaire insérée dans un canal d'insertion 6 du réacteur échangeur 1 où sont usinés des canaux caloporteurs 5 transverses.

Par ailleurs, il est également possible de varier les propriétés des structures monolithiques catalytiques 4 qui sont insérées dans les cartouches amovibles 3, par exemple leurs matériaux, leur forme, le type de catalyseur qui y est déposé, entre autres. Ceci peut être effectué d'une cartouche amovible 3 à l'autre, ou au sein d'une même cartouche amovible 3 en insérant des structures différentes ou en utilisant deux cartouches amovibles 3 différentes pour en faire une seule, qui sera ainsi plus longue.

De plus, les sens de circulation du fluide caloporteur et des réactifs peuvent également être variables selon les besoins. Par exemple, il est possible de faire circuler les réactifs en un aller-retour, ou en plusieurs allers-retours.

Ainsi, la figure 11A illustre un premier exemple de sens de circulation selon les flèches F des réactifs au travers d'un réacteur échangeur 1 conforme à l'invention, selon un seul passage, et la figure 11B illustre un deuxième exemple de sens de circulation selon les flèches F des réactifs au travers d'un réacteur échangeur 1 conforme à l'invention, selon deux passages.

Pour la fabrication d'un réacteur échangeur 1 tel que décrit précédemment, le procédé peut comporter une étape de formation des canaux d'insertion 6 et des canaux caloporteurs 5 du circuit de fluide caloporteur dans un corps de réacteur 2 selon deux variantes.

Selon une première variante, le corps de réacteur 2 est obtenu à partir de la réunion de deux demi-plaques, et le procédé comporte alors les étapes d'usinage au moins en partie sur chaque demi-plaque des canaux d'insertion 6 pour l'insertion des cartouches amovibles 3, d'usinage au moins en partie sur chaque demi-plaque des canaux caloporteurs 5 du circuit de fluide caloporteur, d'assemblage des deux demi-plaques, notamment par vissage ou soudure, pour former un étage du réacteur échangeur 1, et enfin d'assemblage de différents étages de réacteur pour former le réacteur échangeur 1.

Selon une deuxième variante, le corps de réacteur 2 est obtenu à partir d'un seul bloc, le procédé comportant alors l'étape d'usinage des canaux d'insertion 5 et des canaux caloporteurs 6 directement dans ce bloc.

Bien entendu, l'invention n'est pas limitée aux exemples de réalisation qui viennent d'être décrits. Diverses modifications peuvent y être apportées par l'homme du métier.

## Revendications

1. Réacteur échangeur (1), destiné à la mise en oeuvre de réactions catalytiques endothermiques ou exothermiques, comportant :
- un corps de réacteur (2),
- une pluralité de canaux réactifs (3) comprenant un catalyseur, éventuellement supporté par une structure monolithique catalytique (4),
- un circuit de fluide caloporteur pour refroidir les canaux réactifs (3), comprenant des canaux caloporteurs (5),
**caractérisé en ce que** les canaux réactifs se présentent sous la forme de cartouches amovibles (3) au contact direct du circuit de fluide caloporteur et **en ce que** le corps de réacteur (2) comporte une pluralité de canaux d'insertion (6) dans lesquels sont insérés les cartouches amovibles (3) et à la périphérie desquels circule au moins en partie le fluide caloporteur.

2. Réacteur échangeur selon la revendication 1, **caractérisé en ce que** les cartouches amovibles (3) comportent une enveloppe métallique à l'intérieur de laquelle est inséré le catalyseur, éventuellement supporté par la structure monolithique catalytique (4).

3. Réacteur échangeur selon la revendication 1 ou 2, **caractérisé en ce que** les cartouches amovibles (3) comprennent un catalyseur sous forme de grains.

4. Réacteur échangeur selon la revendication 1 ou 2, **caractérisé en ce que** les cartouches amovibles (3) comprennent une structure monolithique catalytique (4) supportant le catalyseur.

5. Réacteur échangeur selon l'une des revendications précédentes, **caractérisé en ce que** le réacteur échangeur (1) comporte un ensemble distributeur de gaz (7) et un ensemble collecteur de gaz (8), les cartouches (3) comportant notamment à chacune de leurs extrémités un distributeur ou collecteur de gaz.

6. Réacteur échangeur selon la revendication 5, **caractérisé en ce qu'**il comporte une arrivée de gaz réactif (9) dans l'ensemble distributeur de gaz (7) et une sortie de produits (10) depuis l'ensemble collecteur de gaz (8).

7. Réacteur échangeur selon l'une quelconque des revendications précédentes, **caractérisé en ce que** les cartouches (3) se présentent sous la forme de tubes cylindriques, notamment de section sensiblement circulaire ou polygonale, par exemple carrée ou rectangulaire.

8. Réacteur échangeur selon l'une quelconque des revendications précédentes, **caractérisé en ce que** les canaux caloporteurs (5) du circuit de fluide caloporteur se présentent au moins en partie sous la forme de canaux longitudinaux et/ou transversaux formés dans le corps de réacteur (2).

9. Réacteur échangeur selon l'une quelconque des revendications précédentes, **caractérisé en ce que** les canaux caloporteurs (5) du circuit de fluide caloporteur sont situés au moins en partie sur la paroi des canaux d'insertion (6), se présentant notamment sous la forme d'alésages formés sur les canaux d'insertion (6), et/ou sur la paroi des cartouches amovibles (3).

10. Réacteur échangeur selon la revendication 8 ou 9, **caractérisé en ce que** les canaux caloporteurs (5) sont sous une forme hélicoïdale.

11. Procédé de fabrication d'un réacteur échangeur (1) selon l'une quelconque des revendications précédentes, **caractérisé en ce qu'**il comporte l'étape de formation des canaux d'insertion (6) et des canaux caloporteurs (5) du circuit de fluide caloporteur dans un corps de réacteur (2).

12. Procédé selon la revendication 11, **caractérisé en ce que** le corps de réacteur (2) est obtenu à partir de la réunion de deux demi-plaques, le procédé comportant les étapes suivantes :
- usinage au moins en partie sur chaque demi-plaque des canaux d'insertion (6) pour l'insertion des cartouches amovibles (3),
- usinage au moins en partie sur chaque demi-plaque des canaux caloporteurs (5) du circuit de fluide caloporteur,
- assemblage des deux demi-plaques, notamment par vissage ou soudure, pour former un étage du réacteur échangeur (1),
- assemblage de différents étages de réacteur pour former le réacteur échangeur (1).

13. Procédé selon la revendication 11, **caractérisé en ce que** le corps de réacteur (2) est obtenu à partir d'un seul bloc, le procédé comportant l'étape d'usinage des canaux d'insertion (5) et des canaux caloporteurs (6) directement dans ce bloc.

## Patentansprüche

1. Austauschreaktor (1), der für die Durchführung von endothermen oder exothermen katalytischen Reaktionen ausgelegt ist, umfassend:
- einen Reaktorkörper (2),
- eine Mehrzahl von Reaktionskanälen (3), die einen Katalysator umfassen, gegebenenfalls unterstützt durch eine monolithische katalytische Struktur (4),
- einen Wärmeträgerfluidkreislauf zum Kühlen der Reaktionskanäle (3), der Wärmeträgerkanäle (5) umfasst,
**dadurch gekennzeichnet, dass** die Reaktionskanäle die Form von ausbaubaren Patronen (3) in direktem Kontakt mit dem Wärmeträgerfluidkreislauf haben, und dass der Reaktorkörper (2) eine Mehrzahl von Einsetzkanälen (6) hat, in die die ausbaubaren Patronen (3) eingesetzt sind und an deren Umfang das Wärmeträgerfluid wenigstens teilweise zirkuliert.

2. Austauschreaktor nach Anspruch 1, **dadurch gekennzeichnet, dass** die ausbaubaren Patronen (3) eine metallische Umhüllung umfassen, in deren Inneren der Katalysator eingesetzt ist, gegebenenfalls unterstützt durch die monolithische katalytische Struktur (4).

3. Austauschreaktor nach Anspruch 1 oder 2, **dadurch gekennzeichnet, dass** die ausbaubaren Patronen (3) einen Katalysator in Form von Körnern umfassen.

4. Austauschreaktor nach Anspruch 1 oder 2, **dadurch gekennzeichnet, dass** die ausbaubaren Patronen (3) eine monolithische katalytische Struktur (4) umfassen, die den Katalysator unterstützt.

5. Austauschreaktor nach einem der vorhergehenden Ansprüche, **dadurch gekennzeichnet, dass** der Austauschreaktor (1) eine Gasverteileranordnung (7) und eine Gaskollektoranordnung (8) umfasst, wobei die Patronen (3) insbesondere an jedem ihrer Enden einen Gasverteiler oder -kollektor umfassen.

6. Austauschreaktor nach Anspruch 5, **dadurch gekennzeichnet, dass** er eine Reaktionsgaszuleitung (9) in die Gasverteileranordnung (7) und einen Produktausgang (10) aus der Gaskollektoranordnung (8) umfasst.

7. Austauschreaktor nach einem der vorhergehenden Ansprüche, **dadurch gekennzeichnet, dass** die Patronen (3) die Form von zylindrischen Röhren aufweisen, insbesondere mit im Wesentlichen kreisförmigen oder polygonalen Querschnitt, beispielsweise quadratisch oder rechteckig.

8. Austauschreaktor nach einem der vorhergehenden Ansprüche, **dadurch gekennzeichnet, dass** die Wärmeträgerkanäle (5) des Wärmeträgerfluidkreislaufs wenigstens teilweise die Form von longitudinalen und/oder transversalen Kanälen haben, die in dem Reaktorkörper (2) gebildet sind.

9. Austauschreaktor nach einem der vorhergehenden Ansprüche, **dadurch gekennzeichnet, dass** die Wärmeträgerkanäle (5) des Wärmeträgerfluidkreislaufs wenigstens teilweise auf der Wand der Einsetzkanäle (6) angeordnet sind und im Wesentlichen die Form von Bohrungen aufweisen, die an den Einsetzkanälen (6) und/oder an der Wand der ausbaubaren Patronen (3) gebildet sind.

10. Austauschreaktor nach Anspruch 8 oder 9, **dadurch gekennzeichnet, dass** die Wärmeträgerkanäle (5) eine helikoidale Form haben.

11. Verfahren zur Herstellung eines Austauschreaktors (1) nach einem der vorhergehenden Ansprüche, **dadurch gekennzeichnet, dass** es den Schritt des Bildens der Einsetzkanäle (6) und der Wärmeträgerkanäle (5) des Wärmeträgerfluidkreislaufs in einem Reaktorkörper (2) umfasst.

12. Verfahren nach Anspruch 11, **dadurch gekennzeichnet, dass** der Reaktorkörper (2) ausgehend von der Zusammenfügung von zwei Halbplatten erhalten wird, wobei das Verfahren die folgenden Schritte umfasst:
- Fertigen, wenigstens teilweise auf jeder Halbplatte, der Einsetzkanäle (6) zum Einsetzen der ausbaubaren Patronen (3),
- Fertigen, wenigstens teilweise auf jeder Halbplatte, der Wärmeträgerkanäle (5) des Wärmeträgerfluidkreislaufs,
- Zusammenfügen der zwei Halbplatten, insbesondere durch Schrauben oder Schweißen, um eine Stufe des Austauschreaktors (1) zu bilden,
- Zusammenfügen von verschiedenen Reaktorstufen, um den Austauschreaktor (1) zu bilden.

13. Verfahren nach Anspruch 11, **dadurch gekennzeichnet, dass** der Reaktorkörper (2) ausgehend von einem einzigen Block erhalten wird, wobei das Verfahren den Schritt des Fertigens der Einsetzkanäle (5) und der Wärmeträgerkanäle (6) direkt in diesem Block umfasst.

## Claims

1. An exchange reactor (1), intended to carry out endothermic or exothermic catalytic reactions, including:
- a reactor body (2),
- a plurality of reactive channels (3) comprising a catalyst, optionally supported by a catalytic monolithic structure (4),
- a heat transfer fluid circuit to cool the reactive channels (3), comprising heat transfer channels (5),
**characterized in that** the reactive channels assume the form of removable cartridges (3) in direct contact with the heat transfer fluid circuit and **in that** the reactor body (2) includes a plurality of insertion channels (6) in which the removable cartridges (3) are inserted and at the periphery of which at least part of the heat transfer fluid flows.

2. The exchange reactor according to claim 1, **characterized in that** the removable cartridges (3) include a metal enclosure inside which the catalyst is inserted, optionally supported by the catalytic monolithic structure (4).

3. The exchange reactor according to claim 1 or 2, **characterized in that** the removable cartridges (3) comprise a catalyst in the form of grains.

4. The exchange reactor according to claim 1 or 2, **characterized in that** the removable cartridges (3) comprise a catalytic monolithic structure (4) supporting the catalyst.

5. The exchange reactor according to one of the preceding claims, **characterized in that** the exchange reactor (1) includes a gas dispensing assembly (7) and a gas collecting assembly (8), the cartridges (3) in particular including, at each of their ends, a gas dispenser or collector.

6. The exchange reactor according to claim 5, **characterized in that** it includes a reactive gas inlet (9) in the gas dispensing assembly (7) and a product outlet (10) from the gas collector assembly (8).

7. The exchange reactor according to any one of the preceding claims, **characterized in that** the cartridges (3) assume the form of cylindrical tubes, in particular with a substantially circular or polygonal section, for example square or rectangular.

8. The exchange reactor according to any one of the preceding claims, **characterized in that** the heat transfer channels (5) of the heat transfer fluid circuit at least partially assume the form of longitudinal and/or transverse channels formed in the reactor body (2).

9. The exchange reactor according to any one of the preceding claims, **characterized in that** the heat transfer channels (5) of the heat transfer fluid circuit are located at least partially on the walls of the insertion channels (6), at least partially assuming the form of bores formed on the insertion channels (6), and/or on the wall of the removable cartridges (3).

10. The exchange reactor according to claim 8 or 9, **characterized in that** the heat transfer channels (5) are in a helical form.

11. A method for manufacturing an exchange reactor (1) according to any one of the preceding claims, **characterized in that** it includes a step for forming insertion channels (6) and heat transfer channels (5) for the heat transfer fluid in a reactor body (2).

12. The method according to claim 11, **characterized in that** the reactor body (2) is obtained from the union of two half-plates, the method including the following steps:
- machining, at least partly on each half-plate, insertion channels (6) for inserting removable cartridges (3),
- machining, at least partly on each half-plate, heat transfer channels (5) for the heat transfer fluid circuit,
- assembling the two half-plates, in particular by screwing or welding, to form a stage of the exchange reactor (1),
- assembling different reactor stages to form the exchange reactor (1).

13. The method according to claim 11, **characterized in that** the reactor body (2) is obtained from a single block, the method including the step of machining insertion channels (5) and heat transfer channels (6) directly in this block.
